# EUROPÄISCHE PATENTANMELDUNG

(11) **EP 1 659 289 A2**
(43) Veröffentlichungstag der Anmeldung: **24.05.2006**
(21) Anmeldenummer: 05024783.2
(22) Anmeldetag: 14.11.2005
(51) Int. Cl.: F04C 2/08, F04C 15/00, B62D 5/097

(54) **Verdrängereinheit für eine hydraulische Lenkeinrichtung**

(30) Priorität: 18.11.2004 DE 102004055710
(71) Anmelder: Bosch Rexroth AG, 70184 Stuttgart (DE)
(72) Erfinder: Bergmann, Erhard, Dr., 19079 Mirow (DE); Voss, Gerhard, 19370 Parchim (DE); Krausse, Steffen, 19370 Parchim (DE)
(74) Vertreter: Jaap, Reinhard

(57) **Zusammenfassung**

Zur Verbesserung der inneren Dichtheit bei einer gleichzeitigen Erhaltung der Leichtgängigkeit wird eine Verdrängereinheit (2) für eine hydraulische Lenkeinrichtung vorgeschlagen, deren deckelseitiger radialer Dichtspalt (16) in bekannter Weise verschlossen ist. Dazu wird im gegenüberliegenden gehäuseseitigen radialen Dichtspalt (17) eine Ausgleichsnut (22) vorgesehen. Diese Ausgleichsnut (22) ist über mindestens einen Ausgleichskanal (23) mit dem druckführenden Bereich der Verdrängereinheit (2) verbunden.

## Beschreibung

Die Erfindung bezieht sich auf eine Verdrängereinheit nach dem Oberbegriff des Anspruchs 1. Derartige Verdrängereinheiten werden in hydraulischen Lenkeinrichtungen zur Dosierung eines Lenkölstromes eingesetzt.
Eine solche Lenkeinrichtung ist beispielsweise in der DD 99 758 beschrieben. Dabei ist die Verdrängereinheit stirnseitig an einem Gehäuse angeflanscht, das zu einer Drehschiebersteuereinheit gehört. Die Drehschiebersteuereinheit besteht weiterhin aus einer mit Spiel im Gehäuse eingepassten Steuerhülse und einem in der Steuerhülse laufenden Steuerkolben, die beide gegen die Kraft einer Feder relativ und begrenzt zueinander drehbar sind. Der innenliegende Steuerkolben ist drehfest mit einem Handrad und die außenliegende Steuerhülse ist drehfest über eine Antriebswelle mit einem Läuferzahnrad der Verdrängereinheit verbunden. Das Gehäuse, die Steuerhülse und der Steuerkolben besitzen in einer bestimmten Anordnung zueinander ausgerichtete axiale und radiale Steuernuten und Steuerbohrungen, die die Verdrängereinheit saugseitig mit einer Versorgungspumpe und druckseitig mit einem Lenkzylinder verbinden. Außerdem besteht über diese Drehschiebersteuereinheit eine Verbindung zwischen der Ablaufseite des Lenkzylinders und dem Versorgungstank.
Die Verdrängereinheit für eine solche Lenkeinrichtung arbeitet in der Regel nach dem Gerotorprinzip und besteht daher aus einem feststehenden Außenring mit einer Innenverzahnung und einem im Inneren des Außenringes angeordneten und mit dem Außenring kämmenden Läuferzahnrad mit einer Außenverzahnung. Dabei besitzt die Innenverzahnung des Außenringes einen Zahn mehr als die Außenverzahnung des Läuferzahnrades, sodass das Läuferzahnrad eine Drehbewegung um die eigene Achse und eine Pendelbewegung um die Achse des Außenringes vollzichen kann, wobei beide Bewegungen überlagert sind. Durch die unterschiedlichen Zähnezahlen des feststehenden Außenringes und des umlaufenden Läuferzahnrades bilden sich volumenveränderliche Kammern, die axial nach außen mit einem Deckel und axial nach innen mit einer Zwischenscheibe abgeschlossen sind. Diese volumenveränderlichen Kammern vergrößern oder verkleinem sich mit der Bewegung des Läuferzahnrades und werden so wechselweise zu Saug- oder Druckkammern. Diese Saug- und Druckkammem sind dann mit der Drehschiebersteuereinheit verbunden.

Dem konstruktiv bedingten axialen Spiel zwischen dem Läuferzahnrad und der inneren Zwischenschcihc einerseits und dem äußeren Deckel andererseits kommt nun eine besondere Bedeutung zu. So ist dieses Spiel zum einen so groß zu wählen, dass die Reibung zwischen den sich drehenden Teilen gering bleibt und sich dadurch die Drehschiebersteuereinheit auch leicht betätigen lässt. Damit wird auch gleichzeitig der Notlenkbetrieb gewährleistet. Andererseits muss das Spiel so eng gewählt werden, damit zwischen den druckführenden Kammern der Verdrängereinheit und den zum Vcrsorgungstank führenden Ablaufkanälen der Lenkeinrichtung nur ein geringer Leckölstrom fließen kann. Es hat sich nun herausgestellt, dass der sich einstellende Leckölstrom auch bei einem kleinstrnöglichen Spiel noch so groß ist, dass bei einer während der Lenkbewegung von außen auf den Lenkzylinder einwirkenden Kraft ein Schlupf zwischen der Vcrdrängereinheit und der Drchschiebersteuezeinheit auftritt, durch den die Zuordnung der Stellung des Handrades zur Stellung der gelenkten Räder verloren geht. Das wirkt sich nachteilig auf den Lenkkomfort aus.

Aus der DE 26 06 172 C2 ist dazu eine Lösung bekannt, bei der der radiale Dichtspalt zwischen dem Läuferzahnrad und dem Deckel durch einen axialen Dichtring verschlossen wird, wodurch sich an der äußeren Stirnseite des Läuferzahnrades eine druckbelastete Ringfläche ausbildet. Auf der inneren Stirnseite des Läuferzahnrades und zwar im Spitzenbereich der Zähne sind zusätzliche, für jeden Zahn zwei als Druckkammem wirkende Vertiefungen vorgesehen, die durch einen radialen Dichtsteg voneinander getrennt sind. Dabei bildet jede Vertiefung eine druckbelastete Einzelfläche aus. Da beide Seiten des Läuferzahnrades in diesen Bereichen über das funktionelle Spiel zwischen dem Ringstück und dem Läuferzahnrad druckausgeglichen sind, ergeben sich an beiden Stirnseiten Kräfte, die im selben Verhältnis gegeneinander auf das Läuferzahnrad wirken, wie sich die druckwirksamen Flächen beiderseits des Läuferzahnrades gegenüber stehen. Im Ergebnis dessen stellt sich ein ausgewogeneres Kräfteverhältnis am Läuferzahnrad ein, der den Forderungen nach einer sich in Grenzen haltenden inneren Dichtheit und einer ausreichenden Leichtgängigkeit näher kommt.

Diese Verdrängereinheit hat aber auch Nachteile. So können die Vertiefungen flächenmäßig nur relativ klein ausgeführt werden, weil die für die Abdichtung der volumenveränderlichen Kammern untereinander notwendigen Dichtstege zwischen den Vertiefungen eine größere Fläche beanspruchen. Andererseits kann der Dichtring auf der deckelseitigen Stirnfläche des Läuferzahnrades nicht grüßer gewählt werden, weil der Dichtring sonst in den Bereich der Zahnlücken eingreifen und seine Dichtfunktion einbüßen würde. Das alles führt zu einem stark ungleichen Flächenverhaltnis beider Stirnflächen und damit weiterhin zu einer relativ starken, auf den inneren Dichtspalt gerichteten Anpresskraft. Das beeinträchtigt die Leichtgängigkeit der Drehschiebersteuereinheit, was im schlimmsten Fall einen Notlenkbetrieb unmöglich macht. Das verschlechtert dann obendrein die Fahrsicherheit. Nachteilig ist auch der Belastungsverlauf der auf das Läuferzahnrad wirkenden Kräfte. So wirken die beiderseitigen Kräfte nicht in den gleichen axialen Ebenen, sodass die beiderseitigen Druckflächen am Lauferzahnrad ungleichmäßig belastet werden. Das führt zu Verspannungen am Läuferzahnrad und beeinträchtigt wieder die Lauffreiheit und damit die Leichtgängigkeit der Drehschiebersteuereinheit. Außerdem unterliegt der stirnseitige Dichtring wegen der stets wechselnden Drehrichtung einem erhühten Verschleiß, sodass die Lenkeinrichtung nur eine sehr geringe Lchensdauer aufweist. Das beeinträchtigt die Dichtfunktion und führt zu erhöhten Reparaturkosten. Auch ist die Herstellung relativ aufwendig und damit teuer, weil die Bearbeitungsvorgänge für die Vertiefungen an den Zahnköpfen sich nicht zusammen mit den herkömmlichen Bearbeitungsvorgängen automatisieren lassen.

Der Erfindung liegt daher die Aufgabe zu Grunde, die druckwirksamen Flächen an der inneren Stirnfläche des Läuferzahnrades einer gattungsgemäßen Verdrängereinheit für eine hydraulische Lenkeinrichtung zu vergrößern und gleichzeitig die Fertigung zu vereinfachen.
Diese Aufgabe wird dadurch gelöst, dass im gehäuseseitigen radialen Dichtspalt eine Ausgleichsnut vorgesehen ist, die über mindestens einen Ausgleichskanal mit einem druckführenden bereich der Verdrängereinheit verbunden ist. Zweckmäßige Ausgestaltungen ergeben sich aus den Unteransprüchen 2 bis 4.
Die neue Verdrängereinheit beseitigt die genannten Nachteile des Standes der Technik. Dabei liegt der besondere Vorteil darin, dass die innere Dichtheit verbessert und damit ein Schlupf der Verdrängereinheit beim Auftreten einer äußeren Belastung am Lenkzylinder, wie sie beispielsweise beim Lenken gegen den Anschlag auftritt, weitestgehend vermieden wird. Dabei wird die Reibung der drehenden Teile der Lenkeinheit gering gehalten, sodass eine notwendige Leichtgängigkeit aufrechterhalten bleibt. Vorteile bringt die Ausgleichsnut auch durch ihre einzig mögliche Anordnung zwischen dem axialen Durchbruch und dem Grund der Zähne des Läuferzahnrades. Damit liegen die sich entwickelnden Kräfte zu beiden Seiten des Läuferzahnrades etwa in der gleichen axialen Ebene. Damit wird das Entstehen von Kraftmomenten vermieden, die zu Spannungen im Läuferzahnrad und damit zum Verklemmen der drehenden Teile der Verdrängereinheit führen würden.
Es ist aus fertigungsbedingten Gründen von Vorteil, wenn die Ausgleichsnut und die Ausgleichskanäle im Läuferzahnrad angeordnet sind und dass die Ausgleichskanäle mit dem deckelseitigen radialen Dichtspalt verbunden sind. Denkbar sind aber auch andere konstruktive Varianten, die den gleichen Zweck erfüllen. So kann die Ausgleichsnut auch in der Zwischenscheibe cingebracht sein. Außerdem können die Ausgleichskanäle auch in einer von der Achse abweichenden Richtung angeordnet sein und beispielsweise an Stelle mit dem deckelseitigen radialen Dichtspalt direkt mit den druckfübrenden volumenveränderlichen Kammern der Verdrängereinheit verbunden sein.

Es ist aus ferigungstechnischen Gründen auch von Vorteil, wenn der deckelseitige radiale Dichtspalt durch ein Dichtstück verschlossen wird, das zweckmäßiger Weise dichtcnd in der axialen Duchbruchöffnung des Läuferzahntades eingepasst ist.

Die Erfindung soll anhand eines Ausführungsbeipsieles näher erläutert werden.
Dazu zeigen:
- Fig. 1:: eine Schnittdarstellung einer hydraulischen Lenkeinrichtung,
- Fig. 2:: eine Seitenansicht der Verdrängereinheit,
- Fig. 3:: eine Schnittdarstellung der Verdrängereinheit,
- Fig. 4:: eine Seitenansicht der Verdrängereinheit in einer anderen Ausführungsform und
- Fig. 5:: eine Schnittdarstellung der Verdrängereinheit in der anderen Ausführungsform.

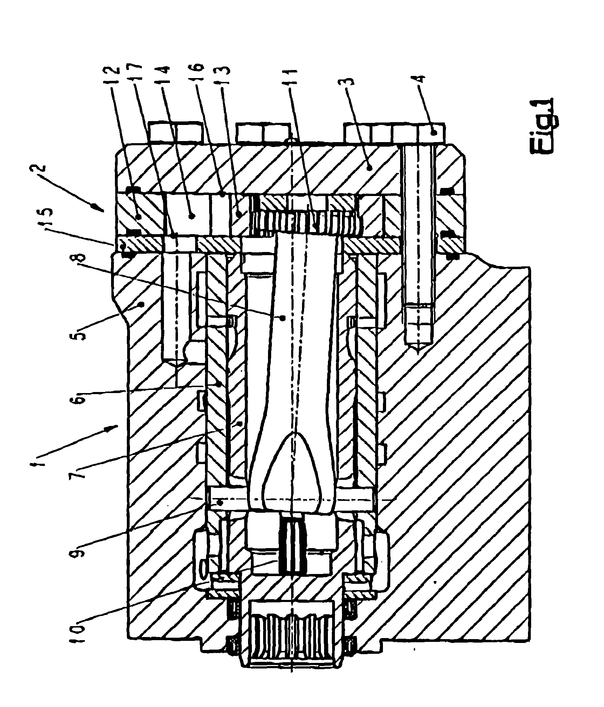

Nach der Fig. 1 besteht die hydraulische Lenkeinrichtung in der Hauptsache aus einem Drehschiebersteuerventil 1 und einer nach dem Gerotorprinzip arbeitenden Verdrängereinheit 2. Dabei ist die Verdrängereinheit 2 mit Hilfe eines Deckels 3 und sieben Befestigungsschrauben 4 stimseitig an einem Gehäuse 5 des Drehschiebersteuerventils 1 angeflanscht,
Das Drehschiebersteuerventil 1 besteht weiterhin aus einer äußeren, im Gehäuse 5 mit Spiel eingepassten Steuerhülse 6 und einem inneren, in der Steuerhülse 6 laufenden Steuerkolben 7. Der innen liegende Steuerkolben 7 des Drehschiebersteuerventils 1 hat einerseits eine drehfeste Verbindung mit einem nicht dargestellten Handrad. Innerhalb des Steuerkolbens 7 befindet sich eine Antriebswelle 8, die einerseits über einen, den Steuerkolben 7 durchdringenden Stift 9 mit der äußeren Steuerhülse 6 verbunden ist.

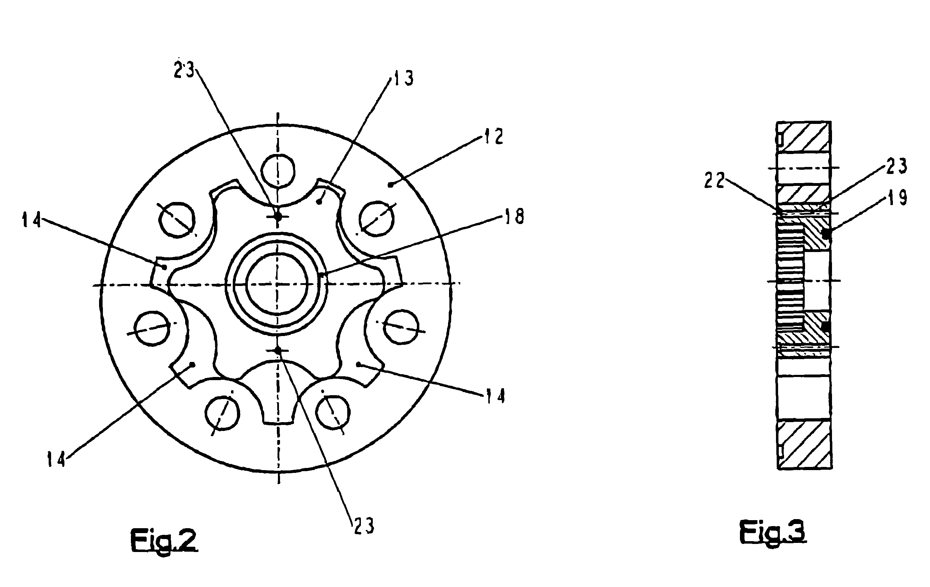

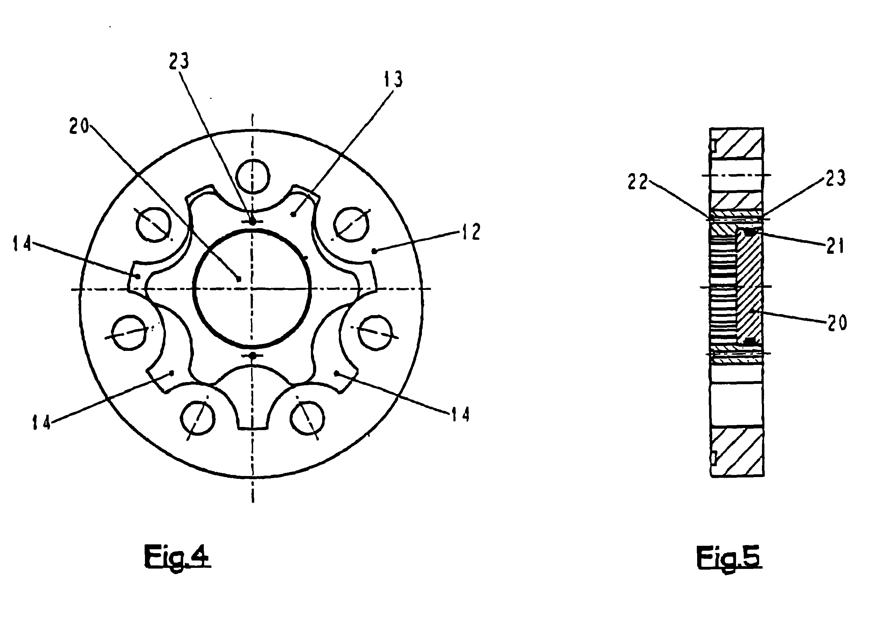

Dieser Stift 9 begrenzt im Zusammenspiel mit einer vergrößerten Bohrung im inneren Steuerkolben 7 den Verdrehwinkel, zwischen der Steuerhülse 6 und dem Steuerkolben 7. Die Steuerhülse 6 und der Steuerkolben 7 stützen sich gegenseitig innerhalb des bcgrenzten Verdrehwinkels durch ein radial angeordnetes Federelement 10 ab. Die Antriebswelle 8 weist andererseits ein balliges Zahnnabenprofil 11 für eine mechanische Verbindung der Verdrängereiheit 2 auf. Das Gehäuse 5 sowie die Steuerhülse 6 und der Steuerkolben 7 des Drchschicbcrsteuervenlils 1 sind mit mehreren radialen und axialen Kanälen ausgestattet, welche die Vcrdrängereinheit 2 saugseitig mit einer hydraulischen Versorgungseinrichtung und druckseitig mit einem hydraulischen Lenkzylinder verbinden. Außerdem verbinden die radialen und axialen Kanäle der Drehsteuereinheit 1 den Lenkzylinder ablaufscitig mit einem Versorgungstank.
Diese Verdrängereinheit 2 besteht, wie auch die Fig. 2 und 4 zeigen, aus einem Außenring 12 mit inneren Zähnen und einem innen liegenden Läuferzahnrad 13 mit äußeren Zähnen. Dabei ist der Außenring 12 mit einem Zahn mehr ausgestattet als das Läuferzahnrad 13 Zähne hat. Im vorliegenden Ausführungsbeispiel weist der Außenring 12 sieben Zähne und das Läuferzahnrad 13 sechs Zähne auf. Durch die unterschiedliche Zahl der Zähne ergeben sich zwischen dem Drehmittelpunkt des Außenringes 12 und dem Drehmittelpunkt des Läuferzahnrades 13 eine vorbestimmte Exzentrizität und damit zwischen den Zähnen des Außenringes 12 und den Zähnen des Läuferzahnrades 13 sieben volumenveränderliche Kammern 14. Dabei unterteilen sich die sieben volumenveränderlichen Kammern 14 der Verdrängereinheit 2 in drei nebeneinander liegende und größer werdende Saugkammem und drei ebenfalls nebeneinander liegende und kleiner werdende Druckkammern. Zwischen den drei Saugkammem und den drei Druckkammern liegt eine druckneutrale Kammer.
Axial begrenzt werden diese volumenveränderlichen Kammern 14 nach außen durch den Deckel 3 und nach innen durch eine Zwischenscheibe 15. Dadurch ergibt sich ein äußerer radialer Dichtspalt 16 zwischen der äußeren Stirnfläche des Läuferzahnrades 13 und der Innenfläche des Deckels 3, der sich von den volumenveränderlichen Kammern 14 bis in den Bereich des Zahnnabenprofils 11 der Antriebswelle 8 erstreckt und der über das Innere der Drehschiebersteuereinheit 1 mit dem zum Versorgungstank führenden Ablauf verbunden ist. Über diesen äußeren radialen Dichtspalt 16 kann Lecköl fließen. Ein innerer radialer Diehtspalt 17 erstreckt sich zwischen der inneren Stirnfläche des Läuferzahnrades 13 und der Innenfläche der Zwischenscheibe 15, der ebenfalls über das Innere der Drehschiebersteuereinheit 1 mit dem zum Vcrsorgungstank führenden Ablauf verbunden ist. Hierüber kann ein weiterer Leckölstrom fließen.
Zur Verringerung des in den Versorgungstank fließenden Leckölstromes befindet sich im deckelseitigen radialen Dichtspalt 16 ein Dichtelement, das in einer ersten Ausführungsform gemäß der Fig. 2 und 3 aus einer Ringnut 18 mit einem radialen Gleitdichtring 19 besteht. Dabei ist die Ringnut 18 im Läuferzahnrad 13 und zwar im radialen Bereich zwischen dem axialen Durchbruch im Läuferzahnrad 13 and dem Grund der Zahnlücken des Läuferzahnrades 13 eingebracht. In einer zweiten Ausführungsform besteht das Dichtelement gemäß der Fig. 4 und 5 aus einem Dichtstück 20, das in den axialen Durchbruch des Läuferzahnrades 13 eingepasst ist. An seinem Umfang besitzt das Dichtstück 20 eine Umfangsnut mit einem axialen Dichtring 21, der an der inneren Umfangsfläche des axialen Durchbruchs im Läuferzahnrad 13 anliegt.
Mit diesen alternativen Dichtelementen, dem Gleitdichtring 19 oder dem Dichtstück 20, ist ein möglicher Lcckölstrom vom deckelseitigen radialen Dichtspalt 16 in den axialen Bereich der Verdrängereinheit 2 unterbrochen. Das Lecköl aus der Verdrängereinheit 2 fließt jetzt ausschließlich aber verstärkt über den gehäuseseitigen radialen Dichtspalt 17 zur Drehschiebersteuereinheit 1 und von dort zum Versorgungstank. Dabei hat der fließende Leckölstrom Durchflusswiderstände zu überwinden, die im Bereich des radialen Dichtspaltes 17 einen Druckabfall bewirken. Mit den beidseitig unterschiedlichen Drücken und den relativ großen Druckflächen zu beiden Seiten des Läuferzahnrades 13 überwiegt der auf die deckelseitige Stimfläche des Läuferzahnrades 13, sodass eine erheblich größere Kraft das Läuferzahnrad 13 von außen belastet und es an die Zwischenscheibe 15 drückt. Zur Verminderung der sich daraus ergebenen negativen Wirkungen ist das Läuferzahnrad 13 an seiner gehäuseseitigen Stirnfläche mit einer Ausgleichsnut 22 ausgestattet, die im radialen Bereich zwischen dem axialen Durchbruch des Läuferzahnrades 13 und dem Grund der Zahnlücken angeordnet ist. Diese Ausgleichsnut 22 ist Über mindestens zwei axiale Ausgleichskanäle 23 mit dem druckführenden Teil des inneren Dichtspaltes 16 auf der Deckelseite der Verdrängereinheit 2 verbunden und schafft so eine ringförmige Druckausgleichsfläche innerhalb der Ausgleichsnut 22. Vorzugsweise sind die axialen Ausgleichskanäle 23 als Durchgangsbohrungen ausgeführt. Mit den ausgeglichenen Drücken beiderseits des Läuferzahnrades 13 und der zusätzlichen Druckausgleichsfläche innerhalb der Ausgleichsnut 22 verringert sich das in Richtung zur Zwischenscheibe 15 gerichtete Kräfteverhältnis im erforderlichen Maße.

### Liste der Bezugszeichen

- 1: Drehschiebersteuerventil
- 2: Verdrängereinheit
- 3: Deckel
- 4: Befestigungsschraube
- 5: Gehäuse
- 6: Steuerhülse
- 7: Steuerkolben
- 8: Antriebswelle
- 9: Stift
- 10: Federelement
- 11: Zahnnabenprofil
- 12: Außenring
- 13: Läuferzahnrad
- 14: volumenveränderliche Kammer
- 15: Zwischenscheibe
- 16: radialer Dichtspalt am Deckel
- 17: radialer Dichtspalt an der Zwischenscheibe
- 18: Ringnut
- 19: radialer Gleitdichtring
- 20: Dichtstück
- 21: axialer Dichtring
- 22: Ausgleichsnut
- 23: axialer Ausgleichskanal

## Patentansprüche

1. Verdrängereinheit für eine hydraulische Lenkeinrichtung, bestehend aus einem festen Außenring (12) mit einer Innenverzahnung und einem mechanisch angetrieben und im Inneren des Außenringes (12) angeordneten, einen Zahn weniger aufweisenden Läuferzahnrad (13) mit einer Außenverzahnung, die beide (12, 13) im Zusammenspiel mit einer Zwischenscheibe (15) und einem Deckel (3) mehrere mit einer Drehsteuereinheit (1) hydraulisch in Verbindung stehende volumenveränderliche Kammern (14) ausbilden, wobei das Läuferzahnrad (13) einerseits mit der Zwischenscheibe (15) einen radialen Dichtspalt (17) und anderseits mit dem Deckel (3) einen radialen Dichtspalt (16) ausbildet,
**dadurch gekennzeichnet, dass** der radiale Dichtspalt (16) mit einem radialen Dichtelement verschlossen ist und im gehäuseseitigen radialen Dichtspalt (17) eine Ausgleichsnut (22) vorgesehen ist, die über mindestens einen Ausgleichskanal (23) mit einem druckführenden. Bereich der Verdrängereinheit (2) verbunden ist.

2. Verdrängereinheit nach Anspruch 1.
**dadurch gekennzeichnet, dass** die Ausgleichsnut (22) und der mindestens eine Ausgleichskanal (23) im Läuferzahnrad (13) angeordnet sind, wobei der mindest eine Ausgleichskanal (23) sich axial bis in den druckführenden Teil des deckelseitigen radialen Dichtspaltes (16) erstreckt.

3. Verdrängereineit nach Anspruch 1,
**dadurch gekennzeichnet, dass** das Dichtelement im deckelseitigen radialen Dichtspalt (16) ein Gleitdichtring (19) ist, der im Läuferzahnrad (13) angeordnet ist.

4. Verdrängereinheit nach Anspruch 1,
**dadurch gekennzeichnet, dass** das Dichtelement im deckelseitigen radialen Dichtspalt (16) ein Dichtstück (20) ist, das in der axialen Durchbruchöffnung des Läuferzahnrades (13) eingepasst ist und das gegenüber dem Läuferxahnrad (13) durch einen axialen Dichtring (21) abgedichtet ist.
